# EUROPÄISCHE PATENTANMELDUNG

(11) **EP 3 540 459 A1**
(43) Veröffentlichungstag der Anmeldung: **18.09.2019**
(21) Anmeldenummer: 19158101.6
(22) Anmeldetag: 19.02.2019
(51) Int. Cl.: G01S 7/481, G01S 17/02, G01V 8/10, G02B 27/42

(54) **OPTOELEKTRONISCHER SENSOR UND VERFAHREN ZUM ERFASSEN VON OBJEKTEN IN EINEM ÜBERWACHUNGSBEREICH**

(30) Priorität: 12.03.2018 DE 102018105607
(71) Anmelder: Sick AG, 79183 Waldkirch (DE)
(72) Erfinder: Ringwald, Siegfried, 79215 Elzach (DE); Menzel, Christoph, 79211 Denzlingen (DE)

(57) **Zusammenfassung**

Es wird ein optoelektronischer Sensor (10) zum Erfassen von Objekten (30) in einem Überwachungsbereich (14) angegeben, der einen Lichtempfänger (18) mit einer vorgeordneten Empfangsoptik (16) zum Erzeugen eines Empfangssignals aus Empfangslicht (12) aufweist, das in einer Lichteinfallsrichtung aus dem Überwachungsbereich (14) auf den Sensor (10) trifft, wobei die Empfangsoptik (16) eine flache Lichtleiterplatte (34) mit einer ersten Hauptfläche (36) und einer die erste Hauptfläche (36) an einer Seite begrenzenden seitlichen Kante (40) umfasst und wobei die Lichtleiterplatte (34) mit ihrer ersten Hauptfläche (36) quer zu der Lichteinfallsrichtung angeordnet ist und das einfallende Empfangslicht (12) zu der seitlichen Kante (40) umlenkt. Dabei weist die Lichtleiterplatte (34) zum Umlenken zu der seitlichen Kante (40) eine diffraktive Struktur (38) auf.

## Beschreibung

Die Erfindung betrifft einen optoelektronischen Sensor und ein Verfahren zum Erfassen von Objekten in einem Überwachungsbereich nach dem Oberbegriff von Anspruch 1 beziehungsweise 12.

Optoelektronische Sensoren nutzen in der Regel eine Empfängerlinse, um das zu detektierende Licht auf ihren Lichtempfänger zu fokussieren. Solche Empfängerlinsen haben eine gewisse Baugröße und Brennweite, und daraus ergibt sich ein definierter Abstand zwischen Empfängerlinse und Lichtempfänger.

Um mit einem Sensor große Reichweiten zu erzielen, sollte möglichst viel Nutzlicht eingesammelt werden und daher die Empfangsapertur groß sein. Eine große Empfangsöffnung geht aber zwangsläufig mit einer großen Bautiefe einher. Man kann in etwa davon ausgehen, dass der Durchmesser der Empfangsapertur der erforderlichen Bautiefe für die Empfangslinse und den Lichtempfänger entspricht. Dieser Zusammenhang lässt sich auch mit einer klassischen Empfangsoptik nicht aufbrechen, für die eine große Empfangsapertur bei sehr kleiner Brennweite in einem Bauteil vereint widersprüchliche Anforderungen stellt.

Große Empfangsaperturen bedeuten also eine große Bautiefe und somit eine große Sensorbauform. Kleine Bauformen, insbesondere kleine Bautiefen, lassen sich nicht mit einer Empfangsoptik größerer Empfangsapertur für deutlich erhöhte Reichweiten ausstatten. Gerade bei einfachen Sensoren wie Miniaturlichtschranken steht jedoch teilweise eine minimale Bautiefe von nur wenigen Millimetern für Optik, Elektronik und mechanische Komponenten zur Verfügung. Beispielsweise bei einem 3,5 mm schmalen Sensor sind abzüglich Gehäusewandungen, Leiterplatte und elektronischen Bauteilen für die Empfangsoptik gerade noch 1,5 mm verfügbar. Mit einer klassischen Empfangsoptik ist dann nicht wesentlich mehr als eine Apertur von 1,5 mm möglich.

Aus der DE 1 985 769 A1 ist ein optisches System mit einer lichtdurchlässigen flachen Lichtleiterplatte bekannt. In verschiedenen Ausführungsformen wird das auf die Flachseite einstrahlende Empfangslicht durch lichtbrechende Subaperturen, Keilflächen oder Schichten unterschiedlicher Brechzahl zu einem Lichtempfänger gelenkt. Diese refraktive Anordnung hat aber nur eine geringe Transmissioneffizienz und resultiert immer noch in einer relativ großen Bautiefe eines damit ausgerüsteten Sensors von 5 bis 10 mm.

Aus der DE 10 2014 102 420 A1 ist ein optoelektronischer Sensor bekannt, dessen Empfangsoptik eine Blende mit einem nachgeordneten optischen Trichterelement aufweist. Dadurch wird aber die Bautiefe der Empfangsoptik sogar noch größer.

Es ist daher Aufgabe der Erfindung, eine kompaktere Bauform eines optoelektronischen Sensors bei großer Reichweite zu ermöglichen.

Diese Aufgabe wird durch einen optoelektronischen Sensor und ein Verfahren zum Erfassen von Objekten nach dem Oberbegriff von Anspruch 1 beziehungsweise 12 gelöst. Der Sensor weist einen Lichtempfänger mit einer Empfangsoptik für Empfangslicht auf, das aus einer Lichteinfallsrichtung aus dem Überwachungsbereich einstrahlt. Die Empfangsoptik umfasst eine flache Lichtleiterplatte, die flächig zu dem Empfangslicht hin orientiert ist, bei der also eine erste Hauptfläche oder Flachseite quer, insbesondere nahezu senkrecht zu der Lichteinfallsrichtung steht. In der Lichtleiterplatte wird dann das Empfangslicht in Richtung einer seitlichen Kante umgelenkt. Der Lichtempfänger ist an der seitlichen Kante angeordnet, wobei zwischen seitlicher Kante und Lichtempfänger auch noch weitere optische Elemente vorgesehen sein können.

Die Erfindung geht nun von dem Grundgedanken aus, die Lichtleiterplatte mit einer diffraktiven Struktur zu versehen. Die Lichtleiterplatte wird so zu einem diffraktiven Flachkollektor, der mit seiner ersten Hauptfläche Empfangslicht einsammelt und zu der seitlichen Kante leitet. Die diffraktive Struktur sorgt für die Umlenkung, also die Richtungsänderung des Empfangslichts aus der Lichteinfallsrichtung in eine Richtung im Wesentlichen innerhalb der Ebene der Leiterplatte. Danach ist dann die Bedingung für Totalreflexion erfüllt, und so propagiert das Empfangslicht innerhalb der Ebene der Lichtleiterplatte zu der seitlichen Kante. Ohne die Umlenkung wäre die Bedingung für Totalreflexion wegen der Lichteinfallsrichtung quer, insbesondere fast senkrecht zur ersten Hauptfläche nicht erfüllt, und das Empfangslicht würde einfach aus der gegenüberliegenden zweiten Hauptfläche wieder austreten. Die diffraktive Struktur kann an der ersten Hauptfläche und/oder an der zweiten Hauptfläche angeordnet sein.

Die Erfindung hat den Vorteil, dass durch die Empfangsoptik mit dem diffraktiven Flachkollektor die Verbindung einer Empfangsoptik mit kleiner Bautiefe und großer Apertur ermöglicht wird, und zwar bei einer Bautiefe, die sogar sehr klein gegenüber der Empfangsapertur sein kann, da die von der Lichtleiterplatte eingenommene Fläche sehr groß werden kann. Die Empfangsoptik hat nur einen relativ kleinen Akzeptanzwinkel, der durch die Winkelselektivität der diffraktiven Struktur und den Grenzwinkel der Totalreflexion in der Lichtleiterplatter bestimmt ist. Zu schräg einfallendes Empfangslicht wird also nicht umgelenkt und in Totalreflexion weitergeleitet. Das ergibt eine laterale Sichtbereichseinschränkung oder eine Art Blendeneffekt, der jedoch bei einem auf eine Nutzlichtquelle ausgerichteten Sensor nur vorteilhaft ist. Die diffraktive Struktur wirkt zusätzlich zu ihrer Umlenkungsfunktion als optisches Bandpassfilter, das auf eine bekannte Nutzlichtquelle abgestimmt werden kann und so das Signal-Rauschverhältnis bei Fremdlicht verbessert. Die Herstellung der Empfangsoptik ist sehr preiswert möglich, gerade bei hohen Stückzahlen, da ein werkzeuggebundenes Verfahren wie etwa Spritzprägen genutzt werden kann, bei dem hauptsächlich Einmalkosten für das Werkzeug selbst anfallen.

Das Empfangssignal des Lichtempfängers wird bevorzugt in einer Steuer- und Auswertungseinheit ausgewertet, um Informationen über Objekte zu erfassen. Ein mögliches Ergebnis der Auswertung ist ein binäres Objektfeststellungssignal je nachdem, ob ein Objekt erfasst ist oder nicht, etwa durch Schwellwertvergleich, wie dies von Lichtschranken und einfachen schaltenden Lichttastern erzeugt wird.

Die Empfangsoptik weist bevorzugt ein an der seitlichen Kante angeordnetes Trichterelement auf. Das Trichterelement, auch als getapertes Element oder kurz Taper bezeichnet, hat an der Lichteintrittsseite einen der seitlichen Kante entsprechenden Querschnitt, der sich zur Lichtaustrittsseite hin verjüngt. An der Lichtaustrittsseite ist der Lichtempfänger angeordnet, wobei sich dazwischen noch weitere optische Elemente befinden können. Mit der Kombination aus Lichtleiterplatte und Trichterelement ist die Empfangsoptik als diffraktiver Flachkollektor mit refraktiv getaperter Optik ausgebildet.

Das Trichterelement ist bevorzugt flach ausgebildet und mit seiner Flächenrichtung in der Verlängerung der Hauptfläche ausgerichtet. Das Trichterelement schließt sich so direkt an die Lichtleiterplatte an und setzt die Hauptfläche fort, wobei ein gewisser Winkel aus der Ebene der Hauptfläche heraus denkbar ist. Das Empfangslicht ist ausgangs des Trichterelements in beiden Querschnittsrichtungen konzentriert. In der einen Achse senkrecht zu der Hauptfläche und dem Trichterelement sorgt dafür die diffraktive Struktur und die meist mehrfache Totalreflexion innerhalb der Ebene der Hauptfläche der flachen Lichtleiterplatte. Der Querschnitt des Empfangslichts ist daher nur noch so hoch wie die geringe Dicke der Lichtleiterplatte. In der zweiten Achse längs der seitlichen Kante verjüngt sich das Trichterelement und sorgt so für die Konzentration.

Lichtleiterplatte und Trichterelement sind bevorzugt einstückig ausgebildet. Das führt zu einem besonders einfachen Aufbau. Das Trichterelement setzt so die Lichtleiterplatte nicht nur optisch fort, sondern bildet auch ein gemeinsames Bauteil.

Das Trichterelement weist bevorzugt eine nichtlineare Verjüngung auf. Dadurch kann die Konzentrationswirkung weiter verbessert oder eine kürzere Länge des Trichterelements ermöglicht werden. Eine lineare Verjüngung würde bedeuten, dass das Trichterelement in der Draufsicht parallel zur Lichteinfallsrichtung ein Trapez darstellt. Nichtlinear ist beispielsweise eine parabolische Form oder eine beliebige Freiform, bei der aber die seitlichen Flanken monoton nach innen weisen, um die das Trichterelement definierende Verjüngung beziehungsweise den Konzentrationseffekt zu erreichen.

Das Trichterelement ist bevorzugt verspiegelt. Dadurch kann es nur innere Reflexionen und keine Lichtverluste geben. Anders als die reine Totalreflexion hängt das nicht von Material und Reflexionswinkel ab.

An einem der Lichtleiterplatte gegenüberliegenden Ende des Trichterelements ist bevorzugt ein Umlenkelement angeordnet. Das Umlenkelement sorgt besonders bevorzugt für eine Umlenkung zurück in die Lichteinfallsrichtung, also quer und insbesondere nahezu senkrecht zu der ersten Hauptfläche. Mit anderen Worten ist die Ausbreitungsrichtung des Empfangslichts nach dem Umlenkelement diejenige, mit der Empfangslicht auch aus einer herkömmlichen Empfangslinse austreten würde, jedoch um die Ausdehnung von Lichtleiterplatte und Trichterelement lateral versetzt. Das am Umlenkelement austretende Strahlbündel wird außerdem deutlich größere Ausfallswinkel haben, aber wenn dort direkt oder nahe genug der Lichtempfänger sitzt, wirkt sich diese Verbreiterung nicht weiter aus. Der Vorteil eines solchen Umlenkelements ist, dass der Lichtempfänger so orientiert sein kann wie in einem herkömmlichen Sensor mit der Ebene der lichtempfindlichen Fläche parallel zu der ersten Hauptfläche. Damit kann eine Leiterplatte, auf welcher der Lichtempfänger angeordnet ist, parallel zu der Hauptfläche ausgerichtet sein. Die Leiterplatte beansprucht so kaum Bautiefe, da ihre Flächenausdehnung die Bautiefe nicht betrifft. Am Ausgang des Trichterelements, ohne Umlenkelement, müsste der Lichtempfänger quer oder im Wesentlichen senkrecht zu der ersten Hauptfläche angeordnet sein, was bei der Erzielung einer geringen Bautiefe des gesamten Sensors hinderlich wäre. Als Umlenkelement kommt beispielsweise ein Prisma in Betracht, alternativ ein gebogenes Anhangstück des Trichterelements. Das Umlenkelement kann verspiegelt werden, um die Effizienz zu verbessern.

Das Umlenkelement weist bevorzugt Strahlformungseigenschaften auf. Besonders vorteilhaft sind konzentrierende oder fokussierende Strahlformungseigenschaften, um den Querschnitt des Empfangslichts bei Auftreffen auf den Lichtempfänger weiter zu verringern. Dazu kann ein als Prisma ausgebildetes Umlenkelement gekrümmte Flächen mit sphärischer Krümmung, asphärischer Krümmung oder einer Freiform aufweisen.

Die diffraktive Struktur weist bevorzugt eine Gitterstruktur auf. Eine Gitterstruktur lässt sich relativ einfach vorgeben und auf der Lichtleiterplatte erzeugen. Besonders bevorzugt handelt es sich um ein Echelettegitter (Blazegitter), das einen Großteil der eingestrahlten Lichtenergie im gewünschten Spektrum in eine Ordnung beugt, die der gewünschten Umlenkung entspricht. Ein Echelettegitter ist folglich auf ein Nutzlichtspektrum abgestimmt, und bei der Umlenkung von Nutzlicht auf die seitliche Kante gibt es nur geringe Lichtverluste.

Die Gitterstruktur ist vorzugsweise linear. Das ist eine besonders einfache diffraktive Struktur, die bei geeigneter Orientierung die gewünschte Umlenkung aus der Lichteinfallsrichtung in die Ebene der Hauptfläche bewirkt.

In einer alternativen bevorzugten Ausführungsform weist die Lichtleiterplatte eine nichtlineare Gitterstuktur als diffraktive Struktur auf, um das Empfangslicht zusätzlich in der Ebene der ersten Hauptfläche nach Innen umzulenken. Eine solche nichtlineare Gitterstruktur erfüllt zunächst die primäre Aufgabe der Umlenkung des Empfangslichts hin zu der seitlichen Kante und damit dem Lichtempfänger oder dem Trichterelement. Zusätzlich sorgt aber die nichtlineare, beispielsweise gebogene Gitterstruktur auch für eine Umlenkung innerhalb der Ebene parallel zu der ersten Hauptfläche nach Innen. Eine solche nichtlineare Gitterstruktur ist etwas komplexer zu bestimmen und herzustellen. Sie unterstützt aber die Konzentrationswirkung des optischen Trichterelements, das dementsprechend kürzer ausfallen kann, oder sie ersetzt es sogar.

Die Lichtleiterplatte weist bevorzugt mindestens zwei Segmente auf, deren Gitterstrukturen unterschiedlich ausgerichtet sind, um das Empfangslicht zusätzlich in der Ebene der ersten Hauptfläche nach Innen umzulenken. Die Segmente sind von Trennlinien durch die erste Hauptfläche quer zu der seitlichen Kante unterteilt, sind also eine Art Streifen, deren Schmalseiten gemeinsam die seitliche Kante bilden. Bis auf ein mögliches zentrales Segment sind die Segmente oder zumindest deren Gitterstrukturen etwas zur Mitte der seitlichen Kante hin geneigt. Ähnlich wie bei einer passenden nichtlinearen Gitterstruktur ergibt sich so schon eine Konzentrationswirkung in der Lichtleiterplatte, die das Trichterelement unterstützt oder ersetzt. Die Gitterstrukturen sind hier vorzugsweise linear, die Umlenkung nach Innen erfolgt dann anders als bei einer nichtlinearen Gitterstruktur nur aufgrund der unterschiedlichen Ausrichtung. Es ist auch denkbar, Segmente zu bilden und trotzdem nichtlineare Gitterstrukturen je Segment vorzusehen. Dann ergänzen die Konzentrationswirkungen der nichtlinearen Gitterstruktur und der nach Innen gerichteten Ausrichtung der jeweiligen Gitterstruktur einander.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Ansicht eines optoelektronischen Sensors mit einem Flachkollektor als Empfangsoptik;
- Fig. 2: eine schematische Ansicht einer weiteren Ausführungsform eines optoelektronischen Sensors als Lichttaster oder Reflexionslichtschranke;
- Fig. 3: eine schematische Draufsicht auf eine als Flachkollektor ausgebildete Empfangsoptik;
- Fig. 4: eine dreidimensionale Ansicht eines beispielhaften Strahlenverlaufs in einer Empfangsoptik gemäß Figur 3;
- Fig. 5: eine dreidimensionale Ansicht ähnlich Figur 4, jedoch in variierter Perspektive und bei einer Empfangsoptik mit einem zusätzlichen ausgangsseitigen Umlenkelement;
- Fig. 6: eine schematische Draufsicht auf eine als Flachkollektor ausgebildete Empfangsoptik mit nichtlinearer Gitterstruktur;
- Fig. 7: eine schematische Draufsicht auf eine als Flachkollektor ausgebildete Empfangsoptik mit mehreren Segmenten; und
- Fig. 8: eine dreidimensionale Ansicht eines beispielhaften Strahlenverlaufs in einer Empfangsoptik gemäß Figur 7.

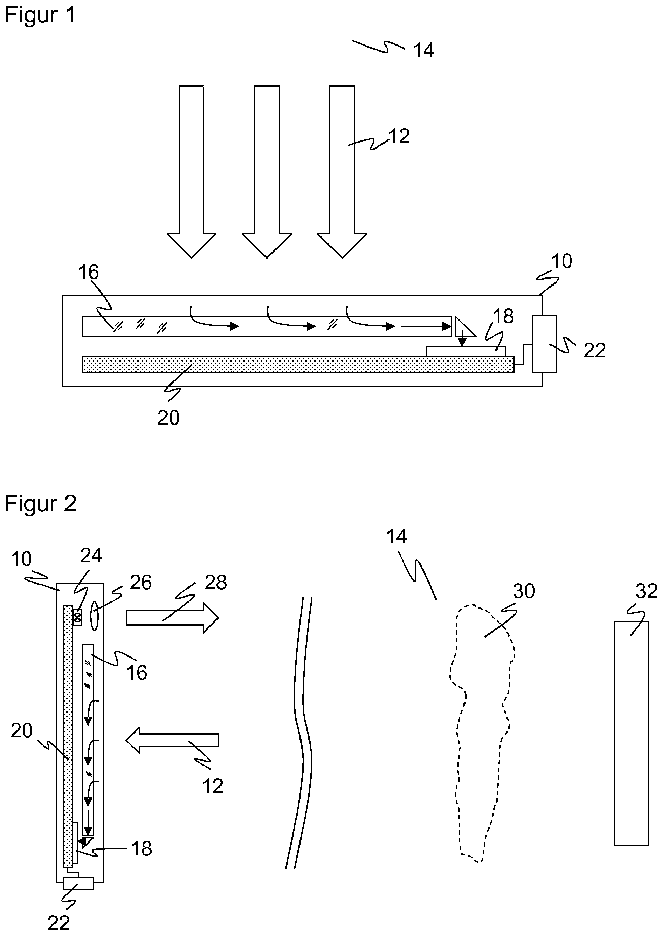

Figur 1 zeigt eine schematische Blockdarstellung eines optoelektronischen Sensors 10. Empfangslicht 12 aus einem Überwachungsbereich 14 fällt mit einer Lichteinfallsrichtung entsprechend den Pfeilen auf eine flache Empfangsoptik 16 mit großer Apertur, um möglichst viel Empfangslicht 12 einzusammeln. Die Empfangsoptik 16 lenkt das Empfangslicht 12 zunächst seitlich um und dann ein weiteres Mal zurück in die Lichteinfallsrichtung, ehe es auf einen Lichtempfänger 18 trifft. Die zweite Umlenkung ist optional, andernfalls ist der Lichtempfänger 18 senkrecht orientiert.

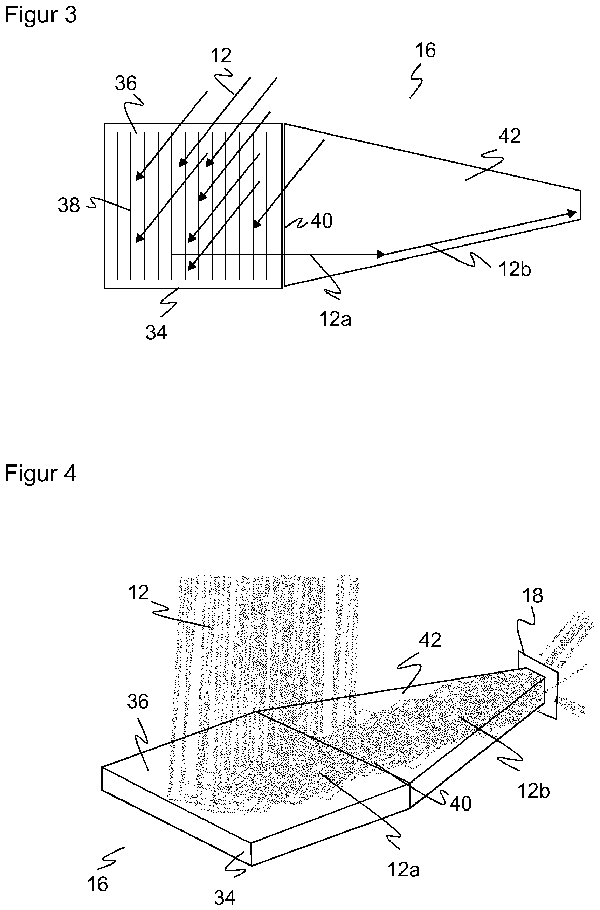

Die Empfangsoptik 16 und deren Lichtumlenkung werden später in verschiedenen Ausführungsformen unter Bezugnahme auf die Figuren 3 bis 8 näher erläutert. Vorläufig ist nur deren grobe geometrische Gestalt von Interesse nämlich, dass sie besonders flach ist.

Der Lichtempfänger 18 erzeugt aus dem auftreffenden Empfangslicht 12 ein elektronisches Empfangssignal, das einer Steuer- und Auswertungseinheit 20 zugeführt wird. In Figur 1 ist die Steuer- und Auswertungseinheit 20 nur symbolisch als Leiterplatte gezeigt, auf der auch der Lichtempfänger 18 angeordnet ist. Allgemein handelt es sich um beliebige analoge und/oder digitale Auswertungsbausteine, wie etwa einen oder mehrere Analogschaltungen, Mikroprozessoren, FPGAs oder ASICs mit oder ohne analoge Vorverarbeitung.

Die parallele Ausrichtung von Empfangsoptik 16, Lichtempfänger 18 und der Leiterplatte mit der Steuer- und Auswertungseinheit 20, auf der auch sonstige Elektronik untergebracht sein kann, erlaubt einen Gesamtaufbau des optoelektronischen Sensors in der gezeigten Flachbauweise mit äußerst geringer Bautiefe von nur wenigen Millimetern.

Aufgrund der Umlenkung erhält die Steuer- und Auswertungseinheit 20 ein summarisches Intensitätssignal, das sich für Auswertungen eignet, in denen die Lichtfleckgeometrie oder eine Winkelinformation des einfallenden Empfangslichts 12 nicht benötigt wird. Ein Beispiel ist ein Schwellwertvergleich, um die Anwesenheit von Objekten festzustellen. Auch Lichtlaufzeitmessungen sind denkbar, sofern die Genauigkeitsanforderungen nicht zu hoch sind, da sich im Millimeterbereich unterschiedliche Lichtwege in der Empfangsoptik 16 mischen. Das Ergebnis der Auswertung, beispielsweise ein dem binären Objektfeststellungssignal entsprechendes Schaltsignal oder ein gemessener Abstand, kann an einer Schnittstelle 22 ausgegeben werden.

Der in Figur 1 dargestellte Sensor 10 ist passiv, empfängt also Empfangslicht 12 einer beliebigen Quelle. Stattdessen kann jedoch auch Empfangslicht 12 von einem zugeordneten Lichtsender empfangen werden. Im Falle einer Einweglichtschranke befindet sich der Lichtsender auf der gegenüberliegenden Seite des Überwachungsbereichs 14, und die Steuer- und Auswertungseinheit 20 kann Objekte im Strahlweg an einem Intensitätsabfall erkennen, weil sie den Lichtsender verdecken.

Figur 2 zeigt eine weitere Ausführungsform eines optoelektronischen Sensors 10 mit einem eigenen Lichtsender 24 samt zugeordneter Sendeoptik 26. Das Empfangslicht 12 ist in diesem Fall das eigene Sendelicht 28, nachdem es im Überwachungsbereich 14 zurückgeworfen wurde. Das ist das Prinzip eines Lichttasters, der ein Objekt 30 erkennt, wenn das Sendelicht 28 darauf fällt und remittiert wird. Es ist aber auch das Funktionsprinzip einer Reflexionslichtschranke, zu der noch ein kooperativer Reflektor 32 gehört, auf den das Sendelicht 28 ausgerichtet ist. Die Steuer- und Auswertungseinheit 20 erwartet in diesem Fall das von dem Reflektor 32 zurückgeworfene Empfangslicht 12. Schiebt sich ein Objekt 30 vor den Reflektor 32, so fällt der Empfangspegel ab, und daran kann das Objekt 30 erkannt werden, erneut beispielsweise durch Schwellwertvergleich. Um das eigene Sendelicht 28 von Fremdlicht zu unterscheiden und so das Schaltverhalten wesentlich robuster zu machen, können im Sende- und Empfangspfad zwei Polarisationsfilter angeordnet sein, deren Polarisationsrichtung entsprechend einer Polarisationsdrehung des Reflektors 32 gekreuzt ist.

Figur 3 zeigt eine schematische Draufsicht auf die Empfangsoptik 16. Das Empfangslicht 12 ist symbolisch durch eine Vielzahl von Pfeilen dargestellt, deren Einfallsrichtung im Wesentlichen senkrecht zur Papierebene ist, was nur perspektivisch angedeutet werden kann.

Die Empfangsoptik 16 weist eine flache Lichtleiterplatte 34 oder einen Flachkollektor auf. In der Draufsicht ist von der flachen Lichtleiterplatte 34 nur die obere Hauptfläche 36 oder Flachseite zu erkennen. In Tiefenrichtung senkrecht zur Papierebene ist die Lichtleiterplatte 34 sehr dünn, ihre Dicke ist um Faktoren geringer als die laterale Ausdehnung der Hauptfläche 36. Mit der Hauptfläche 36 sammelt die Lichtleiterplatte 34 Empfangslicht 12 mit sehr großer Apertur ein.

Eine diffraktive Struktur 38 auf der Lichtleiterplatte 34 sorgt für eine Umlenkung des Empfangslichts 12 hin zu einer seitlichen Kante 40. Die diffraktive Struktur 38 kann oben an der ersten Hauptfläche 36 und/oder unten an der gegenüberliegenden Flachseite angeordnet sein. Nach der Umlenkung propagiert Empfangslicht 12a in einer neuen Richtung, in Figur 3 nach rechts, innerhalb der Lichtleiterplatte 34, und wird dabei durch Totalreflexion geführt. Die seitliche Kante 40 ist nicht notwendig nur ein einziges gerades Teilstück, sondern kann auch nur stückweise gerade mit Kantensegmenten in einem Winkel nahe 180° zueinander oder gebogen sein.

Die diffraktive Struktur 38 kann insbesondere ein Echelettegitter (Blazegitter) sein. Ein solches Echelettegitter beugt einfallendes Empfangslicht 12 einer definierten Wellenlänge sehr stark und fast nur in eine bestimmte Beugungsordnung. Die Beugung ist also chromatisch selektiv, was zugleich den Vorteil einer optischen Bandpasswirkung bietet, die auf einen eigenen Lichtsender 24 abgestimmt werden kann. Die Beugung ist außerdem wegen des starken Maximums in einer Beugungsordnung sehr richtungsspezifisch. Dadurch entsteht eine neue Vorzugsrichtung des Lichtstrahlenbündels hin zu der seitlichen Kante 40 unter so flachen Winkeln, dass das umgelenkte Empfangslicht 12a aufgrund von Totalreflexion in der Lichtleiterplatte 34 bleibt. In die Richtung der weiteren Kanten der Lichtleiterplatte 34 wird kein Empfangslicht 12 gebeugt, so dass dort auch nichts verlorengeht. Es wäre aber auch möglich, hier eine Spiegelbeschichtung anzubringen.

An die Einkopplung in die Lichtleiterplatte 34 durch die diffraktive Struktur 38 und somit die Umlenkung in der Lichtleiterplatte 34 zu der seitlichen Kante 40 schließt sich optional eine zweite Licht sammelnde oder konzentrierende Funktion an. Dazu ist an der seitlichen Kante 40 vorzugsweise ein optisches Trichterelement 42 angeordnet. Das optische Trichterelement 42 ist ein sich im Querschnitt verjüngendes Bauteil, welches das in einer Querrichtung des Trichterelements 42 parallel zur Ausdehnung der seitlichen Kante 40 konzentrierte Empfangslicht 12b erzeugt.

Der Strahlverlauf in der Empfangsoptik 16 wird durch ein simuliertes Beispiel besser verständlich, das in Figur 4 in einer dreidimensionalen Ansicht gezeigt ist. Das nahezu senkrecht einfallende Empfangslicht 12 wird an der Ober- beziehungsweise Unterseite durch die diffraktive Struktur 38 gebeugt und als umgelenktes Empfangslicht 12a zu der seitlichen Kante 40 geleitet. In dem optischen Trichterelement 42 wird daraus konzentriertes Empfangslicht 12b, das auf den an einer Strahlaustrittsstelle des Trichterelements 42 angeordneten Lichtempfänger 18 fällt.

Somit wird das Empfangslicht 12 in beiden Querschnittsrichtungen konzentriert. In einer Höhenrichtung ist die Ausdehnung durch die geringe Dicke der Lichtleiterplatte 34 begrenzt, die sich in dem optischen Trichterelement 42 fortsetzt oder die dort sogar noch weiter verringert wird. In der Breitenrichtung, parallel zu der seitlichen Kante, greift die Fokussierungs- oder Konzentrationswirkung durch die querschnittsverringernde Geometrie des optischen Trichterelements 42. Beide Achsen erfüllen die Bedingung der wellenleitergeführten Totalreflexion. Lichtleiterplatte 34 und optisches Trichterelement 42 sind aus geeignetem transparentem Kunststoff hergestellt, wie PMMA oder PC. Zur Unterstützung der Totalreflexion können Spiegelbeschichtungen angebracht werden.

Das optische Trichterelement 42 ist vorzugsweise ebenso flach aufgebaut wie die Lichtleiterplatte 34 und schließt so unmittelbar an die Form der seitlichen Kante 40 an. Es ist möglich, beides einstückig auszubilden. Um die Strahlformung in dem optischen Trichterelement 42 weiter zu optimieren, kann die Verjüngung auch einen parabolischen oder anderen, zulaufenden Querschnittsverlauf haben.

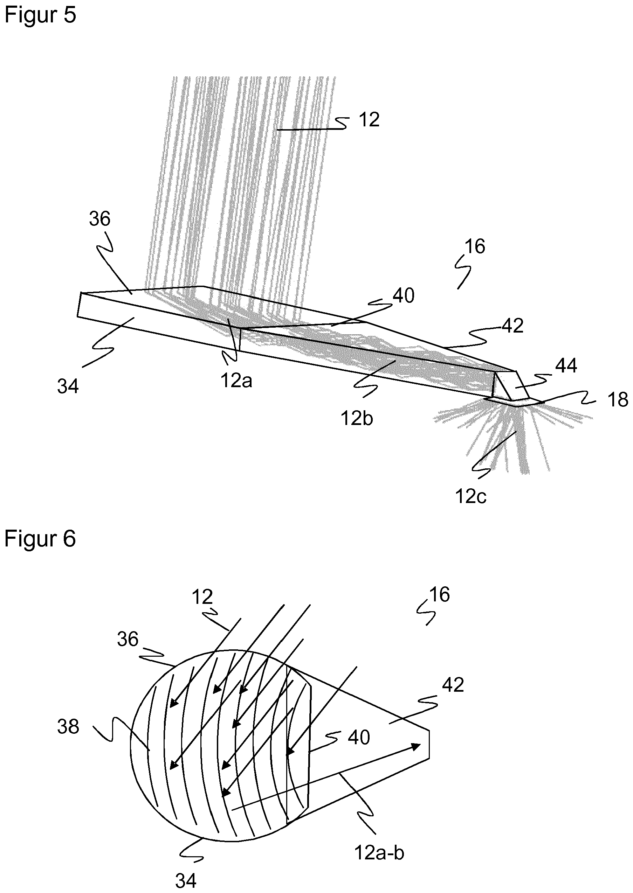

Figur 5 zeigt nochmals eine dreidimensionale Ansicht eines beispielhaften Strahlverlaufs in einer Empfangsoptik 16. Im Unterschied zu Figur 4 befindet sich an der Strahlaustrittsstelle des Trichterelements 42 nicht schon der Lichtempfänger 18 selbst, sondem zunächst ist noch ein weiteres Umlenkelement 44 zur Lichtkopplung in den Lichtempfänger 18 dazwischen angeordnet. Dadurch kehrt das austretende Empfangslicht 12c praktisch wieder in die ursprüngliche Lichteinfallsrichtung zurück, lediglich lateral um die Ausdehnung der Empfangsoptik 16 versetzt und verbreitert, was aber bei der Nähe des Lichtempfängers 18 keine Rolle spielt. Aufgrund der Lichtausfallsrichtung kann der Lichtempfänger 18 parallel zur Hauptfläche 36 ausgerichtet sein, und dies ermöglicht die besonders flache, in Figur 1 gezeigte Anordnung mit einer Leiterplatte der Steuer- und Auswertungseinheit 20 parallel zu der Empfangsoptik 16.

In Figur 5 ist das Umlenkelement 44 als Umlenkprisma ausgestaltet. Das Prisma kann Planflächen aufweisen oder zusätzlich eine Licht fokussierende Form besitzen, etwa mit sphärisch oder asphärisch gekrümmten Flächen oder einer Freiformfläche darstellen. Das Prisma kann wie das optische Trichterelement 42 zumindest teilweise verspiegelt sein, um Auskoppelverluste insbesondere am Ende des optischen Trichterelements zu reduzieren. Alternativ zu einem separaten Umlenkelement 44 ist auch vorstellbar, das optische Trichterelement 42 mit einer Art nach unten gerichtetem Fortsatz vorzugsweise mit Verspiegelung auszubilden, der diese Funktion erfüllt. Lichtleiterplatte 34, Trichterelement 42 und/oder Umlenkelement 44 können einstückig ausgebildet sein.

Figur 6 zeigt eine Draufsicht auf eine weitere Ausführungsform der Empfangsoptik 16. In der Ausführungsform gemäß Figur 3 ist die diffraktive Struktur 38 als lineare Gitteranordnung ausgebildet. Dementsprechend erfolgt eine reine Umlenkung und Konzentration nur in der Tiefenrichtung der Lichtleiterplatte 34. Die Konzentration in der zweiten lateralen Achse findet dort erst in dem optischen Trichterelement 42 statt.

In der Ausführungsform gemäß Figur 6 ist nun stattdessen eine nichtlineare Gitteranordnung als diffraktive Struktur vorgesehen. Dadurch wird das Empfangslicht 12 schon sofort in beiden Achsen konzentriert. Das Trichterelement 42 kann dementsprechend kürzer werden oder gar ganz entfallen.

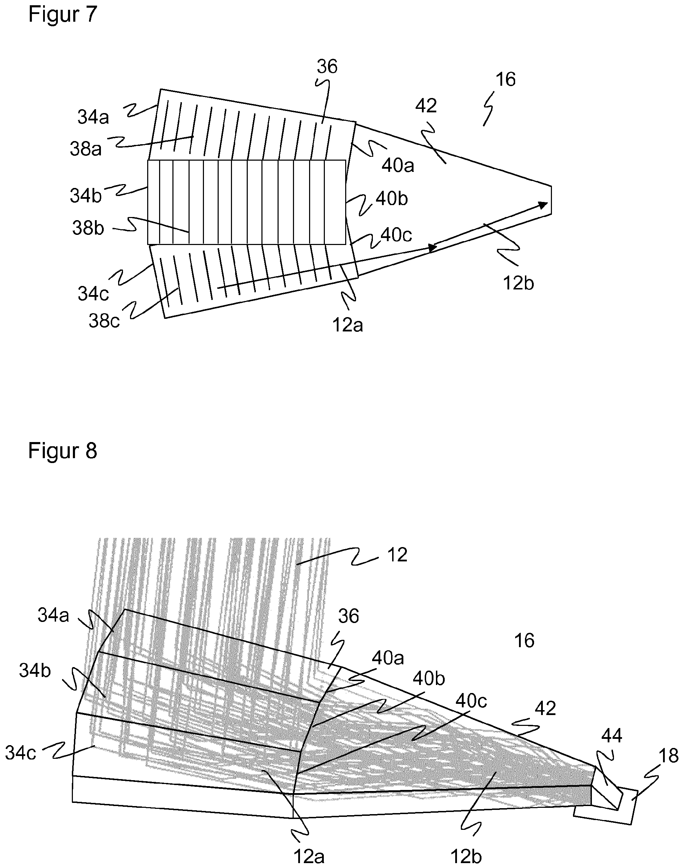

Figur 7 zeigt eine Draufsicht auf eine weitere Ausführungsform der Empfangsoptik 16. Hier ist die Lichtleiterplatte 34 in mindestens zwei Segmente 34a-c unterteilt, die in etwa querstreifenartig sind und die seitliche Kante 40 entsprechend aufteilen. Die Anzahl der Segmente ist zunächst nicht beschränkt. Die Segmente 34a,c mit Ausnahme des zentralen Segments 34b sind leicht nach innen verkippt. Genaugenommen ist das nur relevant für die linearen Gitteranordnungen 38a,c darauf.

Durch die segmentierte Anordnung linearer Gitteranordnungen 38a-c erfolgt schon eine gewisse Konzentration auch in lateraler Richtung. Die Segmentierung ist also eine Alternative zu einer nichtlinearen Gitteranordnung gemäß Figur 6, um mit einem kürzeren Trichterelement 42 oder sogar ganz ohne das Trichterelement 42 auszukommen. Eine Segmentierung gemäß Figur 7 kann aber auch mit nichtlinearen Gitterstrukturen gemäß Figur 6 kombiniert werden.

Figur 8 illustriert in einer dreidimensionalen Ansicht einen beispielhaften Strahlengang in einer Empfangsoptik 16 mit einer segmentierten Lichtleiterplatte 34a-c wie in Figur 7. Dabei wurde als Anstellwinkel der äußeren Segmente 34a,c ein Winkel von ± 9° gewählt. Die Fläche am Eingang, also bei der Hauptfläche 36, beträgt 4mm * 4,2mm, am Ausgang vor dem Lichtempfänger 18 beträgt die Fläche 1,2 mm * 1,2mm. Insgesamt kann so mit einem teilverspiegelten Umlenkprisma 44 eine Koppeleffizienz der gesamten Empfangsoptik 16 von 56% erreicht werden.

Mit einem erfindungsgemäßen diffraktiven Flachkollektor wird beispielsweise bei einer Bautiefe von nur 1 mm eine Empfangsapertur von 25 mm² und mehr erreicht. Auch größere Empfangsaperturen von beispielsweise 6 mm * 8 mm sind möglich. Der Signalgewinn steigt damit um eine Größenordnung, die Reichweite des Sensors lässt sich um Faktoren zwei, drei und mehr erhöhen. Dabei bleibt es bei äußerst kleinen Bautiefen von beispielsweise nur 3,5 mm, die nur eine herkömmliche Apertur von 1,5 mm zuließe. Erfindungsgemäß stehen diese 1,5 mm für die Dicke der flachen Empfangsoptik 16 zur Verfügung, die aber eine ungleich größere Fläche bereitstellt, mit Kantenlängen, welche die Dicke um einen Faktor zwei, drei und mehr in beiden Richtungen übersteigen.

## Patentansprüche

1. Optoelektronischer Sensor (10), insbesondere Lichtschranke oder Lichttaster, zum Erfassen von Objekten (30) in einem Überwachungsbereich (14), der einen Lichtempfänger (18) mit einer vorgeordneten Empfangsoptik (16) zum Erzeugen eines Empfangssignals aus Empfangslicht (12) aufweist, das in einer Lichteinfallsrichtung aus dem Überwachungsbereich (14) auf den Sensor (10) trifft, wobei die Empfangsoptik (16) eine flache Lichtleiterplatte (34) mit einer ersten Hauptfläche (36) und einer die erste Hauptfläche (36) an einer Seite begrenzenden seitlichen Kante (40) umfasst und wobei die Lichtleiterplatte (34) mit ihrer ersten Hauptfläche (36) quer zu der Lichteinfallsrichtung angeordnet ist und das einfallende Empfangslicht (12) zu der seitlichen Kante (40) umlenkt, **dadurch gekennzeichnet,**
**dass** die Lichtleiterplatte (34) zum Umlenken zu der seitlichen Kante (40) eine diffraktive Struktur (38) aufweist.

2. Sensor (10) nach Anspruch 1,
wobei die Empfangsoptik (16) ein an der seitlichen Kante (40) angeordnetes Trichterelement (42) aufweist.

3. Sensor (10) nach Anspruch 2,
wobei das Trichterelement (42) flach ausgebildet und mit seiner Flächenrichtung in der Verlängerung der Hauptfläche (36) ausgerichtet ist.

4. Sensor (10) nach Anspruch 2 oder 3,
wobei Lichtleiterplatte (34) und Trichterelement (42) einstückig ausgebildet sind.

5. Sensor (10) nach einem der Ansprüche 2 bis 4,
wobei das Trichterelement (42) eine nichtlineare Verjüngung aufweist.

6. Sensor (10) nach einem der Ansprüche 2 bis 5,
wobei das Trichterelement (42) verspiegelt ist.

7. Sensor (10) nach einem der Ansprüche 2 bis 6,
wobei an einem der Lichtleiterplatte (34) gegenüberliegenden Ende des Trichterelements (42) ein Umlenkelement (44) angeordnet ist.

8. Sensor (10) nach Anspruch 7,
wobei das Umlenkelement (44) Strahlformungseigenschaften aufweist.

9. Sensor (10) nach einem der vorhergehenden Ansprüche,
wobei die diffraktive Struktur (38) eine Gitterstruktur aufweist, insbesondere ein Echelettegitter.

10. Sensor (10) nach Anspruch 9,
wobei die Lichtleiterplatte (34) eine nichtlineare Gitterstruktur als diffraktive Struktur (38) aufweist, um das Empfangslicht (12) zusätzlich in der Ebene der ersten Hauptfläche (36) nach Innen umzulenken.

11. Sensor (10) nach Anspruch 9 oder 10,
wobei die Lichtleiterplatte (34) mindestens zwei Segmente (34a-c) aufweist, deren Gitterstrukturen (38a-c) unterschiedlich ausgerichtet sind, um das Empfangslicht (12) zusätzlich in der Ebene der ersten Hauptfläche (36) nach Innen umzulenken.

12. Verfahren zum Erfassen von Objekten (30) in einem Überwachungsbereich (14), bei dem ein Lichtempfänger (18) mit einer vorgeordneten Empfangsoptik (12) ein Empfangssignal aus mit einer Lichteinfallsrichtung eintreffendem Empfangslicht (12) erzeugt, wobei das Empfangslicht (12) quer, insbesondere nahezu senkrecht auf eine erste Hauptfläche (36) einer flachen Lichtleiterplatte (34) der Empfangsoptik (16) fällt und in der flachen Lichtleiterplatte (34) zu einer die erste Hauptfläche (36) begrenzenden seitlichen Kante (40) umgelenkt wird, **dadurch gekennzeichnet,**
**dass** das Empfangslicht (12) mittels einer diffraktiven Struktur (38) der Lichtleiterplatte (34) umgelenkt wird.
